# EUROPÄISCHE PATENTSCHRIFT

(11) **EP 4 025 443 B1**
(45) Veröffentlichungstag und Bekanntmachung des Hinweises auf die Patenterteilung: **01.03.2023**
(21) Anmeldenummer: 21819335.7
(22) Anmeldetag: 23.11.2021
(51) Int. Cl.: B60J 10/70, B60J 10/25

(54) **PROFILLEISTE MIT EINEM WASSERABLEITENDEN ELEMENT**
PROFILED STRIP WITH A WATER-DISCHARGING ELEMENT
BAGUETTE PROFILÉE COMPORTANT UN ÉLÉMENT D'ÉVACUATION D'EAU

(30) Priorität: 30.11.2020 DE 102020131603
(43) Veröffentlichungstag der Anmeldung: 13.07.2022
(73) Patentinhaber: Elkamet Kunststofftechnik GmbH, 35216 Biedenkopf (DE)
(72) Erfinder: VAUPEL, Yannik, 35232 Dautphetal (DE); KUNKEL, Dirk, 57319 Bad Berlenburg (DE); LANDECK, David, 57319 Bad Berleberg (DE); SCHNEIDER, Timo, 35719 Angelberg (DE)
(86) Internationale Anmeldenummer: PCT/DE2021/100925
(87) Internationale Veröffentlichungsnummer: WO 2022/111760

(56) Entgegenhaltungen:
- EP-A1- 1 571 069
- EP-B1- 3 256 339
- FR-A1- 3 094 282
- US-A1- 2010 194 150

## Beschreibung

Die vorliegende Erfindung befasst sich mit einer Profilleiste mit wasserableitendem Element zur Lenkung und zur kontrollierten Ableitung von Wasser, welches an einer Außenseite der Profilleiste oder in einem Rastbereich der Profilleiste auftritt.

Aus den Schriften EP 1 280 675 B1, DE 20 2008 009 712 U1 und DE 20 2008 006 986 U1 sind Profilleisten in Form eines Wasserkastenprofils mit einem Befestigungsbereich zur Befestigung an einer Windschutzscheibe und einem Rastbereich zur verrastenden Aufnahme der Rippe einer Wasserkastenabdeckung bekannt.

Solche Profilleisten werden an einer Unterkante einer Windschutzscheibe befestigt, welche dann in die Fahrzeugkarosserie eingebaut wird. Es besteht die Gefahr, dass beispielsweise von der A-Säule ablaufendes Wasser, etwa Regenwasser, von dem unteren Ende der A-Säule entlang der Außenseite des Wasserkastenprofils abläuft. Hierbei kommt es zu einem unkontrollierten Abtropfen des Wassers von dem Profil in Richtung des Motorraums. Wasser kann auch in den Rastbereich eindringen und von dort ebenfalls unkontrolliert in den Motorraum tropfen. Damit geht jeweils die Gefahr von Kurzschlüssen der sich im Motorraum befindlichen Elektronik und Sensoren einher.

Die Schrift EP 3 256 339 B1 sieht ein Loch im Befestigungsbereich eines Wasserkastenprofils zur Abführung von zwischen Scheibe und Profilleiste eindringendem Wasser vor. Dadurch wird jedoch ein unkontrolliertes Abtropfen von Wasser von der Profilaußenseite nicht verhindert. Die Schrift FR 3 094 282 A1 sieht eine Ablaufrinne vor, die zusätzlich am Rastbereich in Richtung der Wasserkastenabdeckung vorgesehen ist. Die Schrift EP1 571 069 A1 offenbart eine Anpassungs- und Führungseinrichtung in Form von Clips, welche an einer Profilleiste vorgesehen sind, um während der Montage einer Wasserkastenabdeckung eine Führung für eine Rippe der Wasserkastenabdeckung in den Rastbereich der Profilleiste bereitzustellen. Die Schrift US 2010/0194150 A1 offenbart eine Profilleiste zur Abdichtung einer beweglichen Scheibe eines Kraftfahrzeugs.

Die bekannten Profilleisten führen nicht zu einem kontrollierten Abtropfen von an der Außenseite oder im Rastbereich einer Profilleiste vorhandenem Wasser.

Das technische Problem besteht in der Bereitstellung einer Lösung zum kontrollierten Lenken bzw. Ableiten von Wasser aus dem Rastbereich oder von der Außenseite einer Profilleiste.

Das technische Problem wird durch eine Profilleiste umfassend ein wasserableitendes Element entsprechend dem kennzeichnenden Teil eines der Ansprüche 1 bis 3 oder 5 gelöst.

### Kurzbeschreibung der Erfindung

Ziel der Erfindung ist demnach die Lenkung und/oder Ableitung von im Rastbereich und an der Außenseite einer Profilleiste auftretendem Wasser.

Dies wird erreicht durch eine Profilleiste zur Verbindung einer Windschutzscheibe eines Kraftfahrzeugs mit einer Wasserkastenabdeckung, umfassend einen Befestigungsbereich, welcher mit der Windschutzscheibe verbunden werden kann und eine der Windschutzscheibe zugewandte Befestigungsseite sowie eine der Windschutzscheibe abgewandte Unterseite aufweist, und umfassend einen Rastbereich mit einer Rastnut zur verrastenden Aufnahme einer Rippe der Wasserkastenabdeckung und mit einer der Rastnut abgewandten Außenseite, wobei die Rastnut begrenzt wird durch einen dem Befestigungsbereich benachbarten inneren Schenkel, einen dem inneren Schenkel gegenüberliegenden äußeren Schenkel und einen die beiden Schenkel verbindenden Bodenabschnitt, wobei die Profilleiste über ein wasserableitendes Element verfügt, welches in einem Teilabschnitt entlang einer Längserstreckung der Profilleiste an dem Rastbereich angeordnet ist.

Dabei kann eine parallel zu einer Längsrichtung der Profilleiste gemessene Längserstreckung des Teilabschnitts kleiner sein als die Längserstreckung der Profilleiste.

Das wasserableitende Element ist in einer Ausführungsform als ein im Bereich des Teilabschnitts zumindest an einem Teil der Außenseite des Rastbereichs angeordnetes Zusatzteil ausgebildet.

Das Zusatzteil ist in einer weiteren Ausführungsform so gestaltet, dass es im Querschnitt gesehen zumindest einen Teil des Rastbereichs umgreift. Dabei kann es sich im Querschnitt gesehen optional auch über zumindest einen Teil der Unterseite des Befestigungsbereichs erstrecken.

In einer weiteren Ausführungsform weist das Zusatzteil ein entlang seiner parallel zu einer Längsrichtung der Profilleiste gemessenen Längserstreckung im Wesentlichen einheitliches Querschnittsprofil auf.

Das Zusatzteil kann in einer weiteren Ausführungsform auch ein entlang seiner parallel zu der Längsrichtung der Profilleiste gemessenen Längserstreckung veränderliches Querschnittsprofil aufweisen.

In einer weiteren Ausführungsform kann das Zusatzteil zumindest teilweise aus einem bevorzugt wasserabweisenden oder wasserdichten Schaummaterial gebildet sein.

In einer weiteren Ausführungsform überdeckt das Zusatzteil eine in dem Bodenabschnitt und/oder in dem äußeren Schenkel der Profilleiste vorgesehene Öffnung zumindest teilweise. Dabei kann optional ein zwischen dem Zusatzteil und zumindest einem Teil einer die Öffnung begrenzenden Berandung wirksames Abdichtelement vorgesehen sein.

In einer weiteren Ausführungsform ist das Zusatzteil an einem stirnseitigen Ende des Rastbereichs an der Profilleiste angeordnet, wobei es im Querschnitt gesehen die Rastnut zumindest teilweise abdeckt.

Bei den beiden letztgenannten Ausführungsformen weist das Zusatzteil optional eine fluidleitend mit der Rastnut verbundene Ablauföffnung auf.

Bei einer weiteren Ausführungsform der erfindungsgemäßen Profilleiste ist das wasserableitende Element als eine im Bereich des Teilabschnitts in dem Bodenabschnitt und/oder in dem äußeren Schenkel vorgesehene Ableitöffnung ausgebildet.

In einer weiteren Ausführungsform weist mindestens ein Teilbereich einer die Ableitöffnung begrenzenden Berandung eine in Bezug auf die Rastnut nach außen vorspringende Abtropfkante auf.

In einer nicht erfindungsgemäßen Ausführungsform ist das wasserableitende Element als eine im Bereich des Teilabschnitts auf der Außenseite des Rastbereichs an dem Bodenabschnitt und/oder an dem äußeren Schenkel angeordnete und in Bezug auf die Rastnut nach außen vorspringende Materialverdickung oder als eine an dem Bodenabschnitt und/oder an dem äußeren Schenkel angeordnete und in Bezug auf die Rastnut nach innen vertiefte Einbuchtung ausgebildet.

### Figurenbeschreibung

- Figur 1: Profilleiste in einer Ausführungsform mit einem wasserableitenden Element in Form eines Zusatzteils
- Figur 2: Profilleiste in einer weiteren Ausführungsform mit einem wasserableitenden Element in Form eines Zusatzteils
- Figur 3: Profilleiste in einer weiteren Ausführungsform mit einem wasserableitenden Element in Form eines Zusatzteils
- Figur 4: Profilleiste in einer weiteren Ausführungsform mit einem wasserableitenden Element in Form eines Zusatzteils
- Figur 5: Profilleiste in einer weiteren Ausführungsform mit einem wasserableitenden Element in Form eines Zusatzteils
- Figuren 6a bis 6c: Profilleiste in einer weiteren Ausführungsform mit einem wasserableitenden Element in Form eines Zusatzteils
- Figuren 7a, 7b: Profilleiste in einer weiteren Ausführungsform mit einem wasserableitenden Element in Form einer Ableitöffnung
- Figur 8: Profilleiste in einer nicht erfindungsgemäßen weiteren Ausführungsform mit einem wasserableitenden Element in Form einer lokalen Materialverdickung
- Figur 9: Profilleiste in einer nicht erfindungsgemäßen weiteren Ausführungsform mit einem wasserableitenden Element in Form einer lokalen Einbuchtung

### Ausführliche Beschreibung der Erfindung

### Definitionen:

- Längsrichtung: Richtung der längsten Ausdehnung der Profilleiste (entspricht bei extrudierten Profilleisten der Extrusionsrichtung); bei zur Anpassung an die Unterkante einer Windschutzscheibe gebogenen Profilleisten kann die Längsrichtung einen gekrümmten Verlauf aufweisen
- Längserstreckung (Profilleiste): Ausdehnung der Profilleiste in Längsrichtung
- Teilabschnitt: Abschnitt entlang der Längserstreckung der Profilleiste, an welchem das wasserableitende Element an der Profilleiste angeordnet ist und an dem ein kontrolliertes Abtropfen oder Ableiten von Wasser mittels des wasserableitenden Elements erfolgen soll
- Längserstreckung (Teilabschnitt): Ausdehnung des Teilabschnitts, gemessen in einer zur Längsrichtung der Profilleiste parallelen Richtung
- Längserstreckung (Zusatzteil): Ausdehnung des Zusatzteils, gemessen in einer zur Längsrichtung der Profilleiste parallelen Richtung
- Querschnitt: Schnittebene durch die Profilleiste und/oder das Zusatzteil senkrecht zur Längsrichtung des Profils
- Querschnittsprofil: Profil der Profilleiste oder des Zusatzteils im Querschnitt
- Außenseite des Rastbereichs: Seite des Rastbereichs, die der Rastnut abgewandt ist
- Befestigungsseite des Befestigungsbereichs: Seite des Befestigungsbereichs, welche der Befestigung an einer Windschutzscheibe dient und ein Befestigungsmittel für die Windschutzscheibe umfassen kann; im mit der Windschutzscheibe verbundenen Zustand ist die Befestigungsseite der Windschutzscheibe zugewandt
- Unterseite des Befestigungsbereichs: Seite des Befestigungsbereichs, die der Befestigungsseite abgewandt ist
- Außenseite der Profilleiste: die Außenseite der Profilleiste umfasst die Außenseite des Rastbereichs und die Unterseite des Befestigungsbereichs
- Innerer Schenkel: Schenkel, der in Nachbarschaft des Befestigungsbereichs angeordnet ist und einen Teil der Begrenzung der Rastnut darstellt
- Äußerer Schenkel: Schenkel, der dem inneren Schenkel gegenüberliegt und einen Teil der Begrenzung der Rastnut darstellt; der äußere Schenkel ist weiter von dem Befestigungsbereich entfernt als der innere Schenkel
- Bodenabschnitt: Verbindungsabschnitt zwischen dem inneren und äußeren Schenkel

Das erfindungsgemäße wasserableitende Element kann entweder als Zusatzteil an der Außenseite der Profilleiste angebracht sein oder aber integraler Teil der Profilleiste sein und beispielsweise durch eine lokale Öffnung im Rastbereich oder durch eine lokale Konturierung der Außenseite des Rastbereichs gebildet sein. Das wasserableitende Element ist in einem Teilabschnitt entlang der Längserstreckung der Profilleiste am Rastbereich angeordnet, wobei der Teilabschnitt bevorzugt eine kleinere parallel zur Längsrichtung der Profilleiste gemessene Längserstreckung aufweist als die Profilleiste. Dadurch wird ein kontrolliertes Ableiten von Wasser an einer gewünschten Stelle entlang der Längserstreckung der Profilleiste ermöglicht. Es können ein Teilabschnitt oder mehrere Teilabschnitte an derselben Profilleiste vorgesehen sein, auch wenn nachfolgend der Begriff des Teilabschnitts nur im Singular gebraucht wird.

Eine erfindungsgemäße Profilleiste zur Verbindung einer Windschutzscheibe eines Kraftfahrzeugs und einer Wasserkastenabdeckung umfasst in bekannter Weise einen Befestigungsbereich und einen Rastbereich. Eine Windschutzscheibe kann mit dem Befestigungsbereich der Profilleiste an dessen Befestigungsseite mittels eines Befestigungsmittels, beispielsweise einem doppelseitigen Klebeband, verbunden werden. Andere Befestigungsarten sind ebenso möglich.

Der Rastbereich umfasst eine Rastnut, welche sich in Längsrichtung der Profilleiste erstreckt. Die Rastnut dient der Aufnahme einer Rastrippe der Wasserkastenabdeckung. Die Rastnut wird in Richtung des Befestigungsbereichs durch einen inneren Schenkel begrenzt. Dem inneren Schenkel gegenüberliegend befindet sich ein äußerer Schenkel. Zwischen diesen beiden Schenkeln befindet sich ein Bodenabschnitt, welcher beide Schenkel miteinander verbindet und zusammen mit diesen die Rastnut bildet. Bei einer V-förmigen Rastnut stellt der Bodenabschnitt den Bereich dar, an dem sich der innere und der äußere Schenkel treffen. In der Rastnut kann sich ein Rastelement zum bevorzugt verrastenden Eingriff mit der Rippe der Wasserkastenabdeckung befinden. Alternativ oder zusätzlich kann eine Verrastung der Rippe auch durch einen oder mehrere Hinterschnitte an einem oder an beiden Schenkeln erfolgen.

Der Befestigungsbereich und der Rastbereich der Profilleiste sind bevorzugt einstückig miteinander verbunden. Die Profilleiste besteht bevorzugt aus einem Kunststoff und kann bevorzugt in einem Extrusionsverfahren hergestellt sein. Weiterhin kann die Profilleiste Armierungen bevorzugt aus einem Metall oder einer Metalllegierung enthalten.

Die erfindungsgemäße Profilleiste umfasst zudem das in dem Teilabschnitt der Profilleiste an dem Rastbereich angeordnete wasserableitende Element, bei dem es sich um eine insbesondere lokale Konturierung im Bereich der Außenseite des Rastbereichs, um eine in dem Bodenabschnitt und/oder in dem äußeren Schenkel vorgesehene Ableitöffnung oder um ein am Rastbereich angeordnetes Zusatzteil handeln kann.

Die parallel zur Längsrichtung der Profilleiste gemessene Längserstreckung des Teilabschnitts ist bevorzugt kleiner als die Längserstreckung der Profilleiste. Die Längserstreckung des Teilabschnitts beträgt bevorzugt 10%, 5%, 3%, 2% und besonders bevorzugt 1% der Längserstreckung der Profilleiste.

Das wasserableitende Element ist in einer Ausführungsform ein Zusatzteil, welches im Bereich des Teilabschnitts der Profilleiste zumindest an einem Teil der Außenseite des Rastbereichs der Profilleiste angeordnet und bevorzugt kraft- und/oder formschlüssig mit der Profilleiste verbunden ist. Auch eine stoffschlüssige oder adhäsive Befestigung ist denkbar. Das gestattet die einfache und getrennte Herstellung der Profilleiste und des wasserableitenden Elements in getrennt optimierbaren Verfahren. Das Zusatzteil wird separat von der Profilleiste hergestellt. Es wird nach seiner Herstellung an der Profilleiste angeordnet, beispielsweise mittels Verklipsen.

Das Material des Zusatzteils besteht bevorzugt aus Kunststoff und kann identisch zu einem Material der Profilleiste sein. Der Kunststoff kann jedoch auch verschieden dazu sein und etwa härter oder weicher (höhere oder niedrigere Shorehärte) als der Kunststoff der Profilleiste, oder eines Teils davon, sein.

Das Zusatzteil umgreift im Querschnitt gesehen zumindest einen Teil der Außenseite des Rastbereichs. Optional kann sich das Zusatzteil im Querschnitt gesehen zusätzlich über zumindest einen Teil der Unterseite des Befestigungsbereichs erstrecken. Dadurch kann die Befestigung des Zusatzteils an der Profilleiste im Vergleich zu einer nur den Rastbereich umfassenden Querausdehnung verbessert werden.

Ein solches Zusatzteil, beispielweise in Form eines Clips, kann ein entlang seiner Längserstreckung im Wesentlichen einheitliches Querschnittsprofil aufweisen. Der Durchmesser oder die Materialstärke des Zusatzteils ist demnach in Längserstreckung im Wesentlichen gleich. Die Längserstreckung des Zusatzteils bezeichnet seine Ausdehnung in einer zu der Längsrichtung der Profilleiste parallelen Richtung. Dies gestattet die einfache Herstellung des Zusatzteils, beispielsweise durch Extrusion und anschließendes Vereinzeln zu Abschnitten gewünschter Länge.

Alternativ kann das Zusatzteil ein entlang seiner Längserstreckung veränderliches Querschnittsprofil aufweisen. Ein solches Zusatzteil weist dann entlang seiner Längserstreckung voneinander abweichende Materialstärken auf. Dadurch kann das Ablösen von Wassertropfen in einem gewählten Bereich des Zusatzteils forciert werden, in dem die Kontur so gestaltet ist, dass beispielsweise eine Abtropfkante oder eine Abtropfstelle gebildet wird.

Weiterhin kann das Zusatzteil teilweise oder vollständig aus einem bevorzugt wasserabweisenden oder wasserdichten Schaummaterial bestehen. In diesem Fall kann die Anbringung an der Außenseite der Profilleiste auch stoffschlüssig erfolgen. Das Schaummaterial umgreift dabei zumindest einen Teil der Außenseite des Rastbereichs. Zusätzlich kann sich das Schaummaterial auch entlang eines Teils oder der gesamten Unterseite des Befestigungsbereichs erstrecken.

Das Zusatzteil kann im Bereich einer lokalen Öffnung des äußeren Schenkels und/oder des Bodenabschnitts angeordnet sein, wobei es die Außenseite des Rastbereichs im Querschnitt gesehen zumindest teilweise umgreift und die Öffnung dabei zumindest teilweise, bevorzugt im Wesentlichen, abdeckt. Dabei kann ein zwischen dem Zusatzteil und zumindest einem Teil einer die Öffnung begrenzenden Berandung wirksames Abdichtelement vorgesehen sein. Die Öffnung kann durch Stanzen, Bohren, Fräsen, Schneiden oder dergleichen erzeugt werden. Dies ermöglicht die kontrollierte Ableitung von in der Rastnut vorhandenem Wasser.

Das Zusatzteil kann alternativ auch an einem stirnseitigen Ende des Rastbereichs, d.h. im Bereich eines die Längserstreckung der Profilleiste begrenzenden Endes der Profilleiste, angeordnet sein. Entsprechend können auch zwei dieser Zusatzteile an beiden stirnseitigen Enden des Rastbereichs angeordnet werden. Hier kann das Zusatzteil etwa von außen auf das Ende aufgeschoben werden. Dieses Zusatzteil ist so dimensioniert, dass es im Querschnitt gesehen die Rastnut zumindest teilweise, bevorzugt vollständig, abdeckt.

Bei den beiden zuvor genannten Ausführungsformen kann optional eine fluidleitend mit der Rastnut verbundene Ablauföffnung, beispielsweise in Form eines Stutzens oder einer Tülle, vorgesehen sein.

Eine erfindungsgemäße Profilleiste kann auch mehr als eines der zuvor beschriebenen Zusatzteile umfassen. Zudem können an einer erfindungsgemäßen Profilleiste auch mehrere Zusatzteile unterschiedlicher Ausführungsformen angeordnet sein, etwa ein oder zwei Zusatzteile an einem oder beiden stirnseitigen Enden des Rastbereichs kombiniert mit einem oder mehreren Zusatzteilen entlang der Längserstreckung der Profilleiste. Insgesamt schließt die Verwendung eines Zusatzteils die Verwendung eines weiteren Zusatzteils nicht aus, sondern ist in das Belieben des Fachmannes gestellt.

Das wasserableitende Element kann auch integraler Bestandteil der Profilleiste sein. Dadurch entfallen zusätzliche Elemente, die separat hergestellt und an der Profilleiste befestigt werden müssen.

Daher ist in einer weiteren Ausführungsform der Erfindung das wasserableitende Element als eine im Bereich des Teilabschnitts im Rastbereich vorgesehene Ableitöffnung ausgebildet, welche die Rastnut in diesem Bereich lokal öffnet. Die Ableitöffnung kann in dem äußeren Schenkel und/oder in dem Bodenabschnitt ausgebildet sein. Die Ableitöffnung kann durch Stanzen, Bohren, Fräsen, Schneiden oder dergleichen erzeugt werden. Die Ableitöffnung kann sowohl der kontrollierten Ableitung von Wasser aus der Rastnut wie auch zum kontrollierten Abtropfen von an der Außenseite der Profilleiste entlanglaufendem Wasser dienen.

In einer weiteren Ausführungsform weist mindestens ein Teil einer die Ableitöffnung begrenzenden Berandung eine in Bezug auf die Rastnut nach außen vorspringende Abtropfkante auf. Die Ableitöffnung kann gemeinsam mit der vorspringenden Abtropfkante in einem kombinierten Stanzbördelverfahren erzeugt werden. Bevorzugt sind entsprechende Abtropfkanten an zwei sich in Längsrichtung der Profilleiste gegenüberliegenden Berandungsbereichen der Ableitöffnung vorgesehen.

In einer nicht erfindungsgemäßen Ausführungsform der Profilleiste handelt es sich bei dem wasserableitenden Element um eine im Bereich des Teilabschnitts der Profilleiste an der Außenseite des Rastbereichs vorgesehene lokale Materialeinbuchtung oder lokale Materialverdickung. So kann an dem äußeren Schenkel und/oder an dem Bodenabschnitt des Rastbereichs eine in Bezug auf die Rastnut nach außen weisende Materialverdickung vorgesehen sein. Alternativ kann an dem äußeren Schenkel und/oder an dem Bodenabschnitt des Rastbereichs eine in Bezug auf die Rastnut nach innen vertiefte Einbuchtung vorhanden sein. Konturkanten der Materialverdickung oder der Einbuchtung bewirken dabei ein kontrolliertes Abtropfen von Wasser von der Außenseite des Profils.

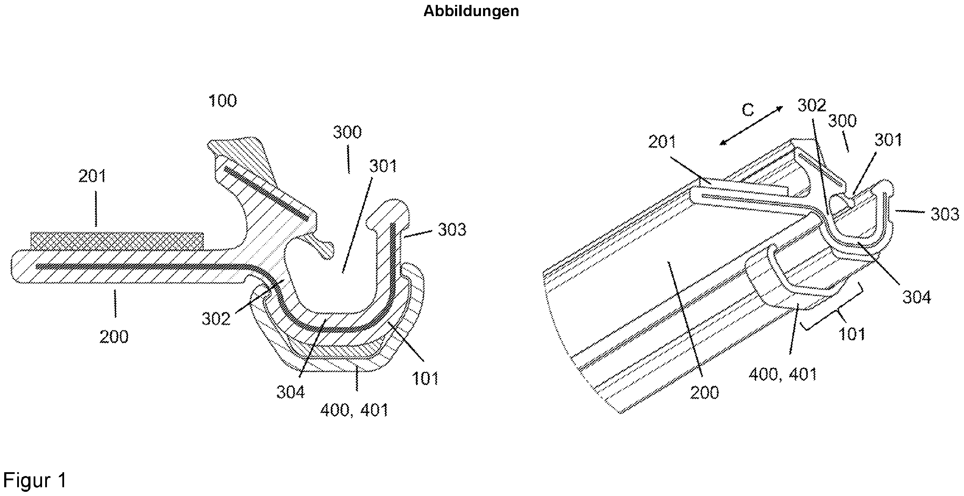

Die Einbuchtung oder die Materialverdickung kann sich bevorzugt an einem im Querschnitt gesehen tiefsten Punkt der Profilleiste im Einbauzustand befinden. Der Einbauzustand ist gegeben, wenn die Profilleiste an einer in einem Fahrzeug montierten Windschutzscheibe befestigt ist. In diesem Einbauzustand ist die Profilleiste schräg geneigt. Ein in Figur 1 linkerhand dargestellter Querschnitt der Profilleiste ist dann beispielsweise um 30° im Uhrzeigersinn gedreht. Der tiefste Punkt des Profils im Querschnitt gesehen liegt dann im Bereich des äußeren Schenkels und/oder im Bereich des Bodenabschnitts und/oder im Übergangsbereich zwischen dem äußeren Schenkel und dem Bodenabschnitt.

Alle zuvor genannten Ausführungsformen wasserableitender Elemente, sowohl solche in Form eines Zusatzteils oder solche in Form von Einbuchtungen und/oder Materialverdickungen und/oder Ableitöffnungen können bei einer gegebenen Profilleiste miteinander kombiniert werden. Entsprechend sind in diesem Fall an einer gegebenen Profilleiste mehrere Teilabschnitte vorhanden, deren Längserstreckung jeweils kleiner als die Längserstreckung der Profilleiste ist.

Die erfindungsgemäße Profilleiste umfassend ein wasserableitendes Element wird zur Lenkung und/oder Ableitung von an oder in der Profilleiste auftretendem Wasser verwendet. Dabei kann es sich beispielweise um an der Außenseite einer Profilleiste auftretendes oder in der Profilleiste vorhandenes Wasser handeln.

Ein Verfahren zur Lenkung und/oder Ableitung von an oder in einer Profilleiste auftretendem Wasser umfasst zumindest die Verfahrensschritte
a) Bereitstellung einer erfindungsgemäßen Profilleiste,
b) Verbindung eines Befestigungsbereich der Profilleiste mit einer Windschutzscheibe.

Soweit das Zusatzteil als wasserableitendes Element genutzt wird, kann der Verfahrensschritt a) die Verfahrensschritte Bereitstellung einer Profilleiste, Bereitstellung des wasserableitenden Elements in Form eines Zusatzteils, und Anordnung des wasserableitenden Elements in dem Teilabschnitt der Profilleiste und zumindest einem Teil der Außenseite des Rastbereichs der Profilleiste umfassen.

Zudem kann das erfindungsgemäße Verfahren die Schritte
c) Einbau der Windschutzscheibe mit der Profilleiste in eine Fahrzeugkarosserie,
d) Verbindung einer Wasserkastenabdeckung mit der Profilleiste
umfassen.

In den Zeichnungen sind einzelne nicht beschränkende Ausführungsbeispiele dargestellt und nachfolgend beschrieben.

### Beschreibung der Ausführungsbeispiele

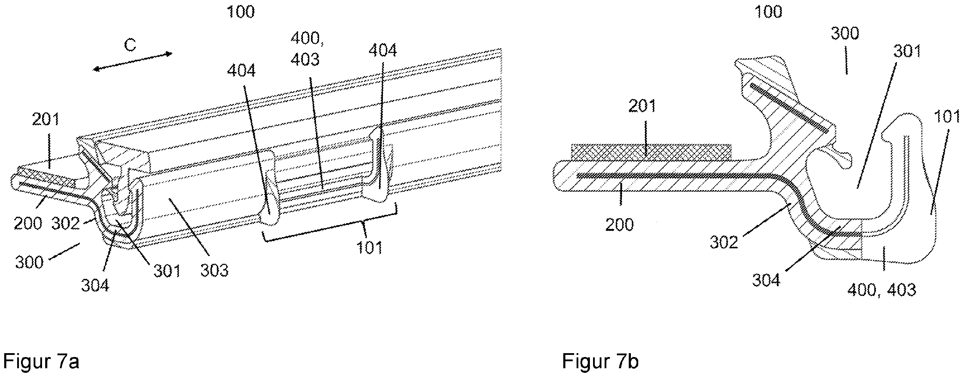

Die Figuren zeigen jeweils eine Profilleiste (100) umfassend einen Befestigungsbereich (200) mit einem Befestigungsmittel (201) zur Verbindung mit einer Windschutzscheibe und einen Rastbereich (300) zur verrastenden Verbindung mit einer Wasserkastenabdeckung. Der Rastbereich (300) umfasst eine sich in Längsrichtung (C) der Profilleiste (100) erstreckende Rastnut (301), in welche eine Rippe der Wasserkastenabdeckung verrastend eingreifen kann, wobei die Rastnut (301) begrenzt wird durch einen inneren Schenkel (302), der benachbart zu dem Befestigungsbereich (200) angeordnet ist, einen dem inneren Schenkel (302) gegenüberliegenden äußeren Schenkel (303) und einen sich zwischen den beiden Schenkeln (302, 303) befindlichen Bodenabschnitt (304). Die Profilleiste (100) weist entlang ihrer Längserstreckung einen Teilabschnitt (101) auf. Die Figuren 1 bis 6b zeigen wasserableitende Elemente (400) in Form eines im Bereich des Teilabschnitts (101) an der Profilleiste (100) angeordneten Zusatzteils (401). Die Figuren 7 bis 9 zeigen wasserableitende Elemente (400) als integraler Bestandteil der Profilleiste (100) im Bereich des jeweiligen Teilabschnitts (101) der Profilleiste (100).

Die Figur 1 zeigt ein als Zusatzteil (401) im Bereich des Teilabschnitts (101) der Profilleiste (100) an der Außenseite des Rastbereichs (300) der Profilleiste (100) angeordnete wasserableitende Element (400). Das Zusatzteil (401) umgreift im Querschnitt gesehen zumindest einen Teil der Außenseite des Rastbereichs (300) und weist ein entlang seiner Längserstreckung einheitliches Querschnittsprofil auf.

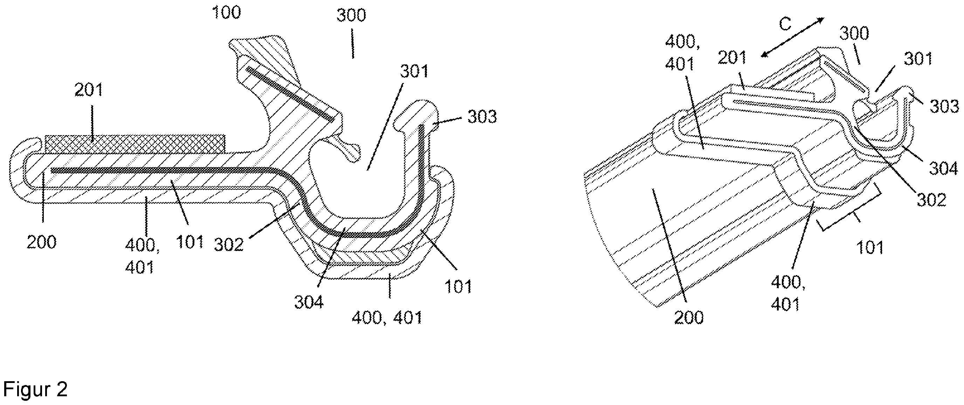

Das in Figur 2 dargestellte wasserableitende Element (400) ist ebenfalls als Zusatzteil (401) im Bereich des Teilabschnitts (101) der Profilleiste (100) an der Außenseite der Profilleiste (100) angeordnet. Dieses Zusatzteil (401) weist ein entlang seiner Längserstreckung einheitliches Querschnittsprofil auf und erstreckt sich im Querschnitt gesehen entlang eines Teils der Außenseite des Rastbereichs (300) und zusätzlich entlang der Unterseite des Befestigungsbereichs (200).

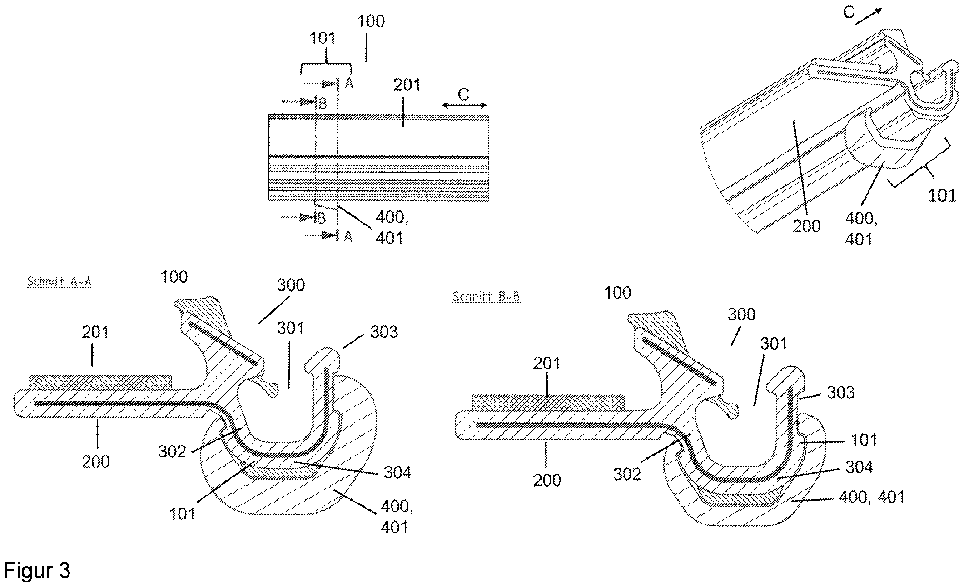

Das in der Figur 3 dargestellte wasserableitende Element (400) ist als Zusatzteil (401) im Bereich des Teilabschnitts (101) an der Außenseite des Rastbereichs (300) der Profilleiste (100) angeordnet und umgreift im Querschnitt gesehen zumindest einen Teil der Außenseite des Rastbereichs (300). Dieses Zusatzteil (401) hat ein entlang seiner Längserstreckung veränderliches Querschnittsprofil. Das Zusatzteil (401) weist im Querschnitt gemäß Figur 3, Schnitt A-A, eine höhere Materialstärke auf als im Querschnitt gemäß Figur 3, Schnitt B-B.

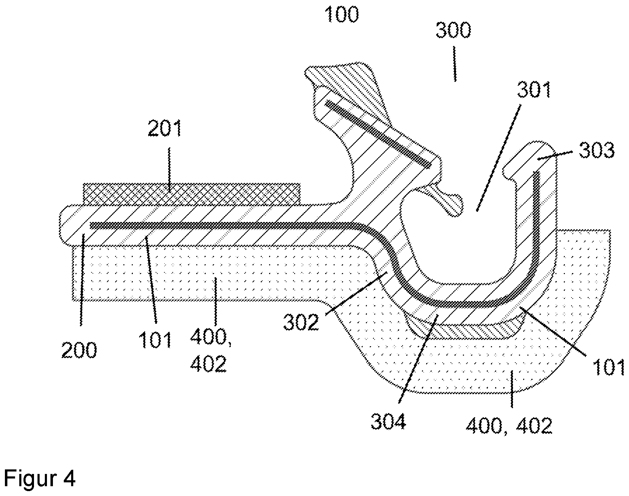

In Figur 4 ist ein wasserableitendes Element (400) in Form eines Zusatzteils (401) dargestellt, welches aus einem bevorzugt wasserabweisenden oder wasserdichten Schaummaterial (402) gebildet ist. Es erstreckt sich im Querschnitt gesehen sowohl entlang eines Teils der Außenseite des Rastbereichs (300) als auch entlang eines Teils der Unterseite des Befestigungsbereichs (200).

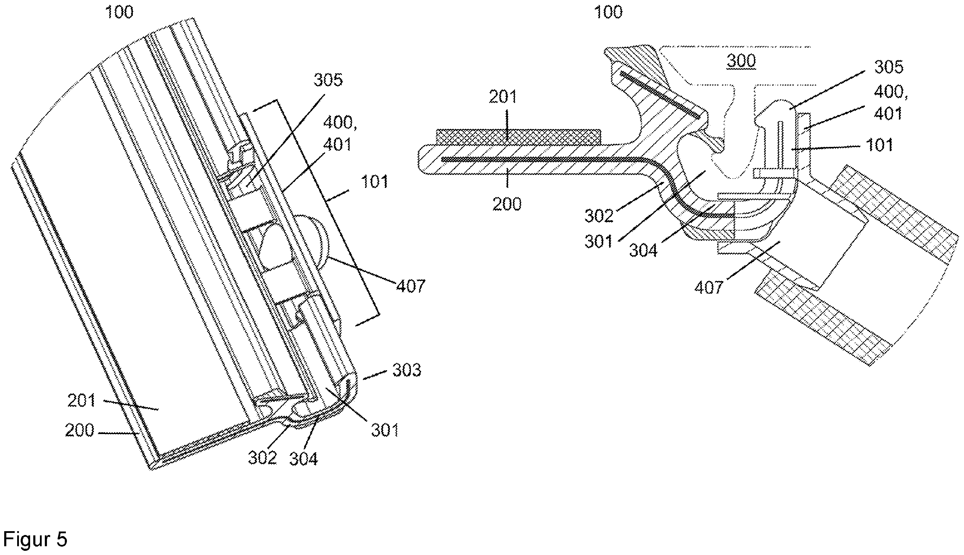

In der Figur 5 ist ein wasserableitendes Element (400) in Form eines eine lokale Öffnung (305) im Rastbereich (300) abdeckendes Zusatzteils (401) gezeigt. Die in dem äußeren Schenkel (303) und in einem Teil des Bodenabschnitts (304) vorgesehene Öffnung (305) wird durch das Zusatzteil (401) abgedeckt. Das Zusatzteil (401) weist zusätzlich eine mit der Rastnut fluidleitend verbundene Ablauföffnung (407) auf. Dies dient der zusätzlichen Ableitung einer in der Rastnut (301) vorhandenen Flüssigkeit. Optional kann eine Dichtung vorhanden sein, welche nach Montage des Zusatzteils (401) die Öffnung (305) im Wesentlichen umgibt.

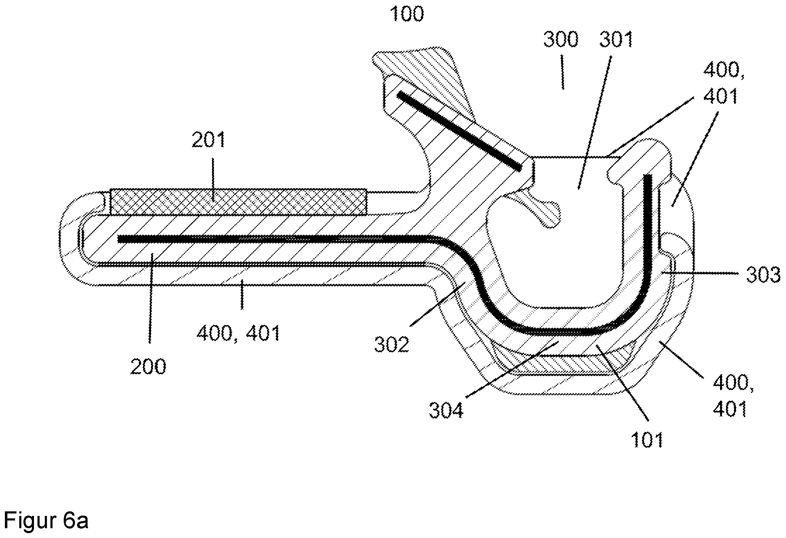

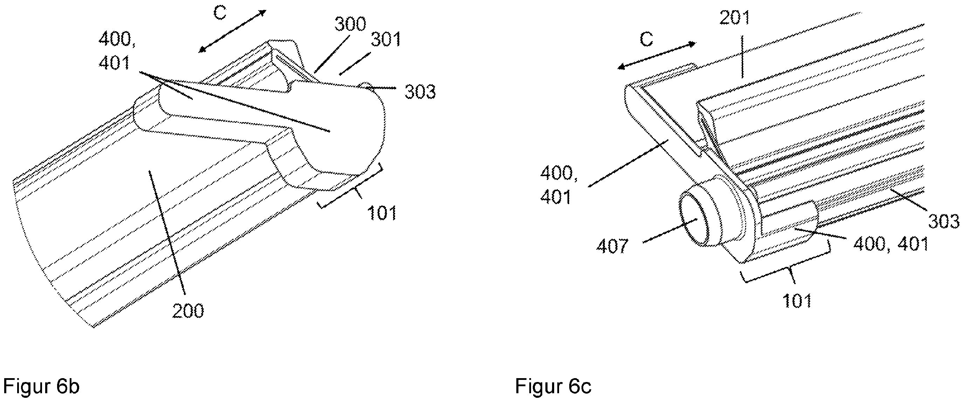

Die Figuren 6a bis 6c zeigen ein an einem stirnseitigen Ende des Rastbereichs (300), d.h. im Bereich eines die Längserstreckung der Profilleiste (100) begrenzenden Endes der Profilleiste (100), im Bereich des Teilabschnitts (101) angeordnetes wasserableitendes Element (400) in Form eines Zusatzteils (401). Das Zusatzteil (401) erstreckt sich im Querschnitt gesehen sowohl entlang eines Teils der Außenseite des Rastbereichs (300) als auch entlang der Unterseite des Befestigungsbereichs (200) und verhindert so insbesondere ein Eindringen von Wasser in die Rastnut (301). Wie in der Figur 6c dargestellt, kann an dem Zusatzteil (401) zusätzlich eine mit der Rastnut fluidleitend verbundene Ablauföffnung (407) vorhanden sein.

Die Figuren 7a und 7b zeigen ein wasserableitendes Element (400) als integraler Bestandteil der Profilleiste (100) im Bereich des Teilabschnitts (101). In diesem Beispiel weist der äußere Schenkel (303) im Bereich des Teilabschnitts (101) ein wasserableitendes Element (400) in Form einer Ableitöffnung (403) auf. Diese Ableitöffnung (403) ist in dem äußeren Schenkel (303) und einem Teil des Bodenabschnitts (304) ausgebildet. Wie in Figur 7a gezeigt, sind an sich in Längsrichtung (C) der Profilleiste (100) gegenüberliegenden Bereichen der die Ableitöffnung (403) begrenzenden Berandung Abtropfkanten (404) vorhanden, welche quer zur Längsrichtung (C) orientiert sind. Die Abtropfkanten (404) springen in Bezug auf die Rastnut (301) nach außen vor und ermöglichen ein kontrolliertes Abtropfen des Wassers an dieser Stelle der Profilleiste (100).

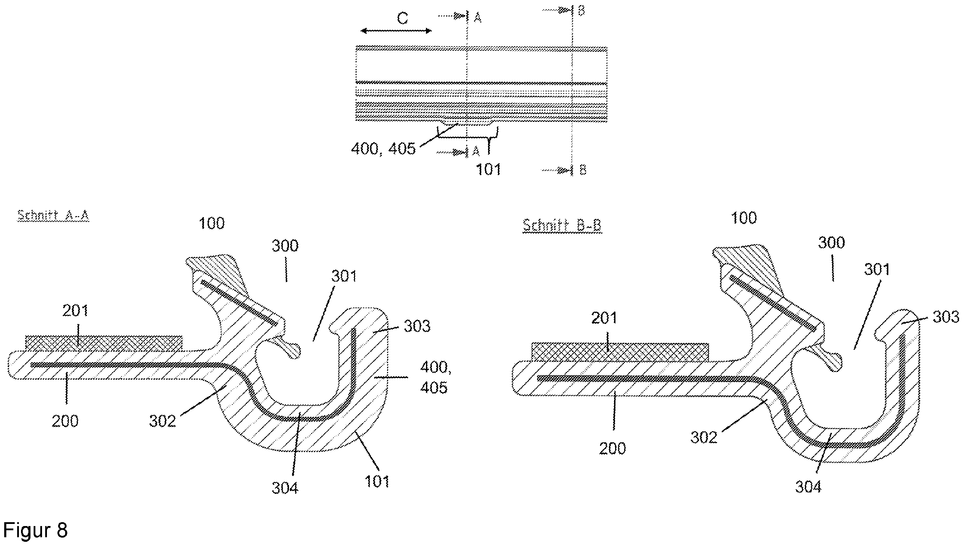

In der Figur 8 ist im Bereich des Teilabschnitts (101) ein nicht erfindungsgemäßes wasserableitendes Element (400) im Bereich des Teilabschnitts (101) in Form einer in Bezug auf die Rastnut (301) nach außen weisenden Materialverdickung (405) der Außenseite des Rastbereichs (300) gezeigt. Hier betrifft die Materialverdickung (405), wie im Schnitt A-A gezeigt, den äußeren Schenkel (303), den inneren Schenkel (302) und den Bodenabschnitt (304). Diese Verdickung (405) ist nur in einem das wasserableitende Element (400) bildenden Bereich des Rastbereichs (300) der Profilleiste (100) vorgesehen, während die Profilleiste (100) außerhalb dieses Bereichs ein im Schnitt B-B gezeigtes Querschnittsprofil aufweist.

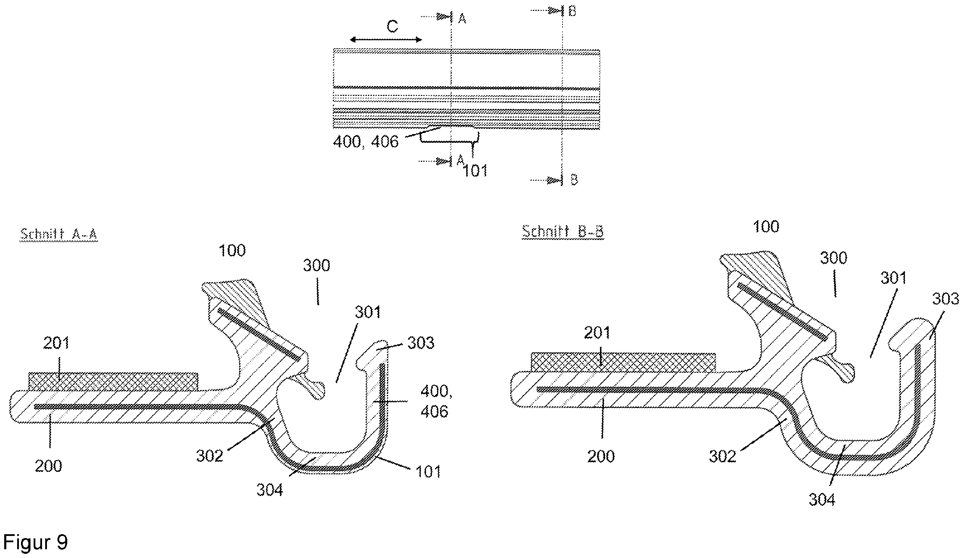

In der Figur 9 ist ein nicht erfindungsgemäßes wasserableitendes Element (400) im Bereich des Teilabschnitts (101) in Form einer in Bezug auf die Rastnut (301) nach innen vertieften Einbuchtung (406) der Außenseite des Rastbereichs (300) gezeigt. Die Einbuchtung (406) betrifft den äußeren Schenkel (303), den inneren Schenkel (302) und den Bodenabschnitt (304) und ist nur in einem das wasserableitende Element (400) bildenden Bereich des Rastbereichs (300) der Profilleiste (100) vorgesehen (vgl. Schnitt A-A), während die Profilleiste (100) außerhalb dieses Bereichs ein im Schnitt B-B gezeigtes Querschnittsprofil aufweist.

### Bezugszeichenliste

- 100: Profilleiste
- 101: Teilabschnitt der Profilleiste
- 200: Befestigungsbereich
- 201: Befestigungsmittel
- 300: Rastbereich
- 301: Rastnut
- 302: innerer Schenkel
- 303: äußerer Schenkel
- 304: Bodenabschnitt
- 305: Öffnung
- 400: wasserableitendes Element
- 401: Zusatzteil (als wasserableitendes Element)
- 402: Schaummaterial (als wasserableitendes Element)
- 403: Ableitöffnung (als wasserableitendes Element)
- 404: Abtropfkante
- 405: nach außen weisende Verdickung (als wasserableitendes Element)
- 406: nach innen vertiefte Einbuchtung (als wasserableitendes Element)
- 407: Ablauföffnung
- C: Längsrichtung

## Patentansprüche

1. Profilleiste (100) zur Verbindung einer Windschutzscheibe eines Kraftfahrzeugs mit einer Wasserkastenabdeckung, umfassend einen Befestigungsbereich (200), welcher mit der Windschutzscheibe verbunden werden kann und eine der Windschutzscheibe zugewandte Befestigungsseite sowie eine der Windschutzscheibe abgewandte Unterseite aufweist, und umfassend einen Rastbereich (300) mit einer Rastnut (301) zur verrastenden Aufnahme einer Rippe der Wasserkastenabdeckung und mit einer der Rastnut (301) abgewandten Außenseite, wobei die Rastnut (301) begrenzt wird durch einen dem Befestigungsbereich (200) benachbarten inneren Schenkel (302), einen dem inneren Schenkel (302) gegenüberliegenden äußeren Schenkel (303) und einen die beiden Schenkel (302, 303) verbindenden Bodenabschnitt (304), wobei die Profilleiste (100) über ein wasserableitendes Element (400) verfügt, welches in einem Teilabschnitt (101) entlang einer Längserstreckung der Profilleiste (100) an dem Rastbereich (300) angeordnet ist, **dadurch gekennzeichnet, dass** das wasserableitende Element (400) als ein im Bereich des Teilabschnitts (101) zumindest an einem Teil der Außenseite des Rastbereichs (300) angeordnetes Zusatzteil (401) ausgebildet ist, und dass das Zusatzteil (401) zumindest teilweise aus einem bevorzugt wasserabweisenden oder wasserdichten Schaummaterial (402) gebildet ist.

2. Profilleiste (100) zur Verbindung einer Windschutzscheibe eines Kraftfahrzeugs mit einer Wasserkastenabdeckung, umfassend einen Befestigungsbereich (200), welcher mit der Windschutzscheibe verbunden werden kann und eine der Windschutzscheibe zugewandte Befestigungsseite sowie eine der Windschutzscheibe abgewandte Unterseite aufweist, und umfassend einen Rastbereich (300) mit einer Rastnut (301) zur verrastenden Aufnahme einer Rippe der Wasserkastenabdeckung und mit einer der Rastnut (301) abgewandten Außenseite, wobei die Rastnut (301) begrenzt wird durch einen dem Befestigungsbereich (200) benachbarten inneren Schenkel (302), einen dem inneren Schenkel (302) gegenüberliegenden äußeren Schenkel (303) und einen die beiden Schenkel (302, 303) verbindenden Bodenabschnitt (304), wobei die Profilleiste (100) über ein wasserableitendes Element (400) verfügt, welches in einem Teilabschnitt (101) entlang einer Längserstreckung der Profilleiste (100) an dem Rastbereich (300) angeordnet ist, **dadurch gekennzeichnet, dass** das wasserableitende Element (400) als ein im Bereich des Teilabschnitts (101) zumindest an einem Teil der Außenseite des Rastbereichs (300) angeordnetes Zusatzteil (401) ausgebildet ist, und dass das Zusatzteil (401) eine in dem Bodenabschnitt (304) und/oder in dem äußeren Schenkel (303) vorgesehene Öffnung (305) zumindest teilweise überdeckt, wobei ein zwischen dem Zusatzteil (401) und zumindest einem Teil einer die Öffnung (305) begrenzenden Berandung wirksames Abdichtelement vorgesehen sein kann.

3. Profilleiste (100) zur Verbindung einer Windschutzscheibe eines Kraftfahrzeugs mit einer Wasserkastenabdeckung, umfassend einen Befestigungsbereich (200), welcher mit der Windschutzscheibe verbunden werden kann und eine der Windschutzscheibe zugewandte Befestigungsseite sowie eine der Windschutzscheibe abgewandte Unterseite aufweist, und umfassend einen Rastbereich (300) mit einer Rastnut (301) zur verrastenden Aufnahme einer Rippe der Wasserkastenabdeckung und mit einer der Rastnut (301) abgewandten Außenseite, wobei die Rastnut (301) begrenzt wird durch einen dem Befestigungsbereich (200) benachbarten inneren Schenkel (302), einen dem inneren Schenkel (302) gegenüberliegenden äußeren Schenkel (303) und einen die beiden Schenkel (302, 303) verbindenden Bodenabschnitt (304), wobei die Profilleiste (100) über ein wasserableitendes Element (400) verfügt, welches in einem Teilabschnitt (101) entlang einer Längserstreckung der Profilleiste (100) an dem Rastbereich (300) angeordnet ist, **dadurch gekennzeichnet, dass** das wasserableitende Element (400) als ein im Bereich des Teilabschnitts (101) zumindest an einem Teil der Außenseite des Rastbereichs (300) angeordnetes Zusatzteil (401) ausgebildet ist, und dass das Zusatzteil (401) an einem stirnseitigen Ende des Rastbereichs (300) an der Profilleiste (100) angeordnet ist und im Querschnitt gesehen die Rastnut zumindest teilweise abdeckt.

4. Profilleiste (100) nach einem der Ansprüche 2 oder 3, **dadurch gekennzeichnet, dass** das Zusatzteil (401) eine fluidleitend mit der Rastnut verbundene Ablauföffnung (407) aufweist.

5. Profilleiste (100) zur Verbindung einer Windschutzscheibe eines Kraftfahrzeugs mit einer Wasserkastenabdeckung, umfassend einen Befestigungsbereich (200), welcher mit der Windschutzscheibe verbunden werden kann und eine der Windschutzscheibe zugewandte Befestigungsseite sowie eine der Windschutzscheibe abgewandte Unterseite aufweist, und umfassend einen Rastbereich (300) mit einer Rastnut (301) zur verrastenden Aufnahme einer Rippe der Wasserkastenabdeckung und mit einer der Rastnut (301) abgewandten Außenseite, wobei die Rastnut (301) begrenzt wird durch einen dem Befestigungsbereich (200) benachbarten inneren Schenkel (302), einen dem inneren Schenkel (302) gegenüberliegenden äußeren Schenkel (303) und einen die beiden Schenkel (302, 303) verbindenden Bodenabschnitt (304), wobei die Profilleiste (100) über ein wasserableitendes Element (400) verfügt, welches in einem Teilabschnitt (101) entlang einer Längserstreckung der Profilleiste (100) an dem Rastbereich (300) angeordnet ist, **dadurch gekennzeichnet, dass** das wasserableitende Element (400) als eine im Bereich des Teilabschnitts (101) in dem Bodenabschnitt (304) und/oder in dem äußeren Schenkel (303) vorgesehene Ableitöffnung (403) ausgebildet ist.

6. Profilleiste (100) nach Anspruch 5, **dadurch gekennzeichnet, dass** mindestens ein Teilbereich einer die Ableitöffnung (403) begrenzenden Berandung eine von der Außenseite des Rastbereichs (300) in Bezug auf die Rastnut (301) nach außen vorspringende Abtropfkante (404) aufweist.

## Claims

1. Profiled strip (100) for connecting a windscreen of a motor vehicle to a water tank cover, comprising a fastening region (200), which can be connected to the windscreen and has a fastening side facing the windscreen and a bottom side facing away from the windscreen, and comprising a latching region (300) with a latching groove (301) for latching reception of a rib of the water tank cover, and with an outer side facing away from the latching groove (301), wherein the latching groove (301) is delimited by an inner limb (302) adjacent to the fastening region (200), an outer limb (303) opposite the inner limb (302) and a bottom portion (304) connecting the two limbs (302, 303), wherein the profiled strip (100) has a water-discharging element (400) which is arranged on the latching region (300) in a subsection (101) along a longitudinal extent of the profiled strip (100), **characterized in that** the water-discharging element (400) is designed as an additional part (401) which is arranged in the region of the subsection (101) at least on part of the outer side of the latching region (300), and **in that** the additional part (401) is formed at least partially from a preferably water-repellent or waterproof foam material (402).

2. Profiled strip (100) for connecting a windscreen of a motor vehicle to a water tank cover, comprising a fastening region (200), which can be connected to the windscreen and has a fastening side facing the windscreen and a bottom side facing away from the windscreen, and comprising a latching region (300) with a latching groove (301) for latching reception of a rib of the water tank cover, and with an outer side facing away from the latching groove (301), wherein the latching groove (301) is delimited by an inner limb (302) adjacent to the fastening region (200), an outer limb (303) opposite the inner limb (302) and a bottom portion (304) connecting the two limbs (302, 303), wherein the profiled strip (100) has a water-discharging element (400) which is arranged on the latching region (300) in a subsection (101) along a longitudinal extent of the profiled strip (100), **characterized in that** the water-discharging element (400) is designed as an additional part (401) which is arranged in the region of the subsection (101) at least on part of the outer side of the latching region (300), and **in that** the additional part (401) at least partially covers an opening (305) provided in the bottom portion (304) and/or in the outer limb (303), wherein a sealing element which is effective between the additional part (401) and at least part of a boundary delimiting the opening (305) can be provided.

3. Profiled strip (100) for connecting a windscreen of a motor vehicle to a water tank cover, comprising a fastening region (200), which can be connected to the windscreen and has a fastening side facing the windscreen and a bottom side facing away from the windscreen, and comprising a latching region (300) with a latching groove (301) for latching reception of a rib of the water tank cover, and with an outer side facing away from the latching groove (301), wherein the latching groove (301) is delimited by an inner limb (302) adjacent to the fastening region (200), an outer limb (303) opposite the inner limb (302) and a bottom portion (304) connecting the two limbs (302, 303), wherein the profiled strip (100) has a water-discharging element (400) which is arranged on the latching region (300) in a subsection (101) along a longitudinal extent of the profiled strip (100), **characterized in that** the water-discharging element (400) is designed as an additional part (401) which is arranged in the region of the subsection (101) at least on part of the outer side of the latching region (300), and **in that** the additional part (401) is arranged on a face-side end of the latching region (300) on the profiled strip (100) and, as seen in cross section, at least partially covers the latching groove (301).

4. Profiled strip (100) according to either of Claims 2 and 3, **characterized in that** the additional part (401) has a drain opening (407) which is connected in a fluidconducting manner to the latching groove (301).

5. Profiled strip (100) for connecting a windscreen of a motor vehicle to a water tank cover, comprising a fastening region (200), which can be connected to the windscreen and has a fastening side facing the windscreen and a bottom side facing away from the windscreen, and comprising a latching region (300) with a latching groove (301) for latching reception of a rib of the water tank cover, and with an outer side facing away from the latching groove (301), wherein the latching groove (301) is delimited by an inner limb (302) adjacent to the fastening region (200), an outer limb (303) opposite the inner limb (302) and a bottom portion (304) connecting the two limbs (302, 303), wherein the profiled strip (100) has a water-discharging element (400) which is arranged on the latching region (300) in a subsection (101) along a longitudinal extent of the profiled strip (100), **characterized in that** the water-discharging element (400) is designed as a discharging opening (403) which is provided in the region of the subsection (101) in the bottom portion (304) and/or in the outer limb (303) .

6. Profiled strip (100) according to Claim 5, **characterized in that** at least one subregion of a boundary delimiting the discharging opening (403) has a drip edge (404) projecting outwards with respect to the latching groove (301) from the outer side of the latching region (300).

## Revendications

1. Baguette profilée (100) pour relier un pare-brise d'un véhicule automobile à un couvercle de réservoir d'eau, comprenant une zone de fixation (200) qui peut être reliée au pare-brise et qui présente un côté de fixation tourné vers le pare-brise ainsi qu'un côté inférieur détourné du pare-brise, et comprenant une zone d'encliquetage (300) avec une rainure d'encliquetage (301) pour recevoir par encliquetage une nervure du couvercle de réservoir d'eau et avec un côté extérieur détourné de la rainure d'encliquetage (301), la rainure d'encliquetage (301) étant délimitée par une branche intérieure (302) voisine de la zone de fixation (200), une branche extérieure (303) opposée à la branche intérieure (302) et une section de fond (304) reliant les deux branches (302, 303), la baguette profilée (100) disposant d'un élément d'évacuation d'eau (400) qui est agencé dans une section partielle (101) le long d'une extension longitudinale de la baguette profilée (100) sur la zone d'encliquetage (300), **caractérisée en ce que** l'élément d'évacuation d'eau (400) est réalisé sous la forme d'une partie supplémentaire (401) agencée dans la zone de la section partielle (101) au moins sur une partie du côté extérieur de la zone d'encliquetage (300), et **en ce que** la partie supplémentaire (401) est formée au moins partiellement d'un matériau en mousse (402) de préférence hydrofuge ou étanche à l'eau.

2. Baguette profilée (100) pour relier un pare-brise d'un véhicule automobile à un couvercle de réservoir d'eau, comprenant une zone de fixation (200) qui peut être reliée au pare-brise et qui présente un côté de fixation tourné vers le pare-brise ainsi qu'un côté inférieur détourné du pare-brise, et comprenant une zone d'encliquetage (300) avec une rainure d'encliquetage (301) pour recevoir par encliquetage une nervure du couvercle de réservoir d'eau et avec un côté extérieur détourné de la rainure d'encliquetage (301), la rainure d'encliquetage (301) étant délimitée par une branche intérieure (302) voisine de la zone de fixation (200), une branche extérieure (303) opposée à la branche intérieure (302) et une section de fond (304) reliant les deux branches (302, 303), la baguette profilée (100) disposant d'un élément d'évacuation d'eau (400) qui est agencé dans une section partielle (101) le long d'une extension longitudinale de la baguette profilée (100) sur la zone d'encliquetage (300), **caractérisée en ce que** l'élément d'évacuation d'eau (400) est réalisé sous la forme d'une partie supplémentaire (401) agencée dans la zone de la section partielle (101) au moins sur une partie du côté extérieur de la zone d'encliquetage (300), et **en ce que** la partie supplémentaire (401) recouvre au moins partiellement une ouverture (305) prévue dans la section de fond (304) et/ou dans la branche extérieure (303), un élément d'étanchéité agissant entre la partie supplémentaire (401) et au moins une partie d'un bord délimitant l'ouverture (305) pouvant être prévu.

3. Baguette profilée (100) pour relier un pare-brise d'un véhicule automobile à un couvercle de réservoir d'eau, comprenant une zone de fixation (200) qui peut être reliée au pare-brise et qui présente un côté de fixation tourné vers le pare-brise ainsi qu'un côté inférieur détourné du pare-brise, et comprenant une zone d'encliquetage (300) avec une rainure d'encliquetage (301) pour recevoir par encliquetage d'une nervure du couvercle de réservoir d'eau et avec un côté extérieur détourné de la rainure d'encliquetage (301), la rainure d'encliquetage (301) étant délimitée par une branche intérieure (302) voisine de la zone de fixation (200), une branche extérieure (303) opposée à la branche intérieure (302) et une section de fond (304) reliant les deux branches (302, 303), la baguette profilée (100) disposant d'un élément d'évacuation d'eau (400) qui est agencé dans une section partielle (101) le long d'une extension longitudinale de la baguette profilée (100) sur la zone d'encliquetage (300), **caractérisée en ce que** l'élément d'évacuation d'eau (400) est réalisé sous la forme d'une partie supplémentaire (401) agencée dans la zone de la section partielle (101) au moins sur une partie du côté extérieur de la zone d'encliquetage (300), et **en ce que** la partie supplémentaire (401) est agencée à une extrémité frontale de la zone d'encliquetage (300) sur la baguette profilée (100) et, vue en coupe transversale, recouvre au moins partiellement la rainure d'encliquetage (301) .

4. Baguette profilée (100) selon l'une quelconque des revendications 2 ou 3, **caractérisée en ce que** la partie supplémentaire (401) présente une ouverture d'écoulement (407) reliée fluidiquement à la rainure d'encliquetage (301) .

5. Baguette profilée (100) pour relier un pare-brise d'un véhicule automobile à un couvercle de réservoir d'eau, comprenant une zone de fixation (200) qui peut être reliée au pare-brise et qui présente un côté de fixation tourné vers le pare-brise ainsi qu'un côté inférieur détourné du pare-brise, et comprenant une zone d'encliquetage (300) avec une rainure d'encliquetage (301) pour recevoir par encliquetage une nervure du couvercle de réservoir d'eau et avec un côté extérieur détourné de la rainure d'encliquetage (301), la rainure d'encliquetage (301) étant délimitée par une branche intérieure (302) voisine de la zone de fixation (200), une branche extérieure (303) opposée à la branche intérieure (302) et une section de fond (304) reliant les deux branches (302, 303), la baguette profilée (100) disposant d'un élément d'évacuation d'eau (400), qui est agencé dans une section partielle (101) le long d'une extension longitudinale de la baguette profilée (100) sur la zone d'encliquetage (300), **caractérisée en ce que** l'élément d'évacuation d'eau (400) est réalisé sous la forme d'une ouverture d'évacuation (403) prévue dans la zone de la section partielle (101) dans la section de fond (304) et/ou dans la branche extérieure (303).

6. Baguette profilée (100) selon la revendication 5, **caractérisée en ce qu'**au moins une zone partielle d'un bord délimitant l'ouverture d'évacuation (403) présente une arête d'égouttage (404) faisant saillie vers l'extérieur depuis le côté extérieur de la zone d'encliquetage (300) par rapport à la rainure d'encliquetage (301).
